# EUROPEAN PATENT SPECIFICATION

(11) **EP 3 218 103 B1**
(45) Date of publication and mention of the grant of the patent: **09.09.2026**
(21) Application number: 15801061.1
(22) Date of filing: 13.11.2015
(51) Int. Cl.: B01J 29/70, B01J 29/72, B01J 29/74, B01J 29/76, B01J 29/78, C01B 39/48, B01D 53/86, B01J 29/85

(54) **AFX ZEOLITE**
AFX-ZEOLITH
ZÉOLITE DE TYPE AFX

(30) Priority: 14.11.2014 US 201462079940 P
(43) Date of publication of application: 20.09.2017
(73) Proprietor: Johnson Matthey Public Limited Company, Royston SG8 5HE (GB)
(72) Inventor: FEDEYKO, Joseph, Malvern, Pennsylvania 19355 (US); RIVAS-CARDONA, Alejandra, Plymouth Meeting, Pennsylvania 19462 (US); CHEN, Hai-Ying, Conshohocken, Pennsylvania 19428 (US); LOBO, Raul, Newark, DE 19716 (US); PHAM, Trong, Newark, DE 19716 (US)
(74) Representative: Johnson Matthey Public Limited Company
(86) International application number: PCT/US2015/060524
(87) International publication number: WO 2016/077667

(56) References cited:
- US-A- 5 194 235
- YASHODHAN BHAWE ET AL: "Effect of Cage Size on the Selective Conversion of Methanol to Light Olefins", ACS CATALYSIS, vol. 2, no. 12, 7 December 2012 (2012-12-07), US, pages 2490 - 2495, XP055240263, ISSN: 2155-5435, DOI: 10.1021/cs300558x

## Description

### BACKGROUND

### Field of Invention:

The present invention relates to method for synthesizing a zeolite which may be used as catalyst for treating combustion exhaust gas.

### Description of Related Art:

Zeolites are molecular sieves having unique lattice frameworks constructed of alumina and silica cages. The Internal Zeolite Association (IZA) assigns each unique framework type a three-letter code, such as MOR, CHA, or BEA.

Synthesis of zeolite crystals typically involves reacting alumina and silica in the presence of an organic template (also referred to as a structure directing agent or SDA) at elevated temperatures for several days. During crystallization, the alumina and silica co-join to form a crystalline structure around the SDA. The reactants, reaction conditions, and the species of SDA all impact which type or types of framework that are synthesized. When sufficient crystallization has occurred, the crystals are removed from the mother liquor and dried. After the crystals are separated from the mother liquor, the organic SDA is thermally degraded and removed from the crystalline structure, thus leaving a porous molecular sieve.

Zeolites are useful as catalyst for various industrial processes, such as selectively reducing NOₓ in combustion exhaust gases. Several zeolites, such as zeolite Beta and ZSM-5, have been identified as being particularly useful for these types of applications. A zeolite having an AFX framework (referred to herein as AFX zeolites) has been identified as being useful for hydrocarbon cracking and reforming.

The scientific article YASHODHAN BHAWE ET AL: "Effect of Cage Size on the Selective Conversion of Methanol to Light Olefins", ACS CATALYSIS, vol. 2, no. 12, 7 December 2012, pages 2490-2495 and US 5 194 235 A disclose the synthesis of zeolite AFX.

Conventional AFX zeolite synthesis techniques yield mixed phase products - that is, zeolites having two or more framework types. Mixed phase zeolites are often less desirable than pure phase zeolites for catalytic reactions.

### SUMMARY OF THE INVENTION

Applicants have discovered a novel zeolite synthesis technique to prepare a novel form of AFX zeolite. In particular, the AFX zeolite has a silica-to-alumina ratio and crystalline size that is particularly useful as a catalyst for selective catalytic reduction (SCR) of NOₓ in exhaust gas from lean burn engines.

Accordingly, in one aspect of the disclosure (not presently claimed) is an aluminosilicate zeolite comprising at least about 90% phase pure AFX framework, a silica-to-alumina ratio of about 12-32, and preferably a mean crystal size of about 0.5-7 µm.

According to the invention is a method for making an aluminosilicate zeolite comprising at least about 90% phase pure AFX framework and a silica-to-alumina ratio of 12-30, the method comprising the step of reacting a synthesis gel comprising a silica source, an alumina source selected from ammonium-form zeolites and/or hydrogen-form zeolites, and a structured directing agent at a temperature of at least 100 °°C until crystals of AFX zeolite form, wherein the synthesis gel has the following compositional ratios:
SiO₂/Al₂O₃ of 18-105
Na₂O/Al₂O₃ of 7-23
SDA₂O/Al₂O₃ of 1.5-18
H₂O/Al₂O₃ of 775-2845
OH⁻/SiO₂ of 0.3-0.65,
wherein the silica-to-alumina ratio is the atomic framework ratio.

In addition, in another aspect of the disclosure (not presently claimed) is a catalyst for treating an exhaust gas comprising a pure-phase aluminosilicate AFX zeolite loaded with a metal selected from V, Cr, Mn, Fe, Co, Ni, Cu, Zn, Mo, Ru, Rh, Pd, Ag, W, Re, Os, Ir, Pt, and Au.

Also provided in another aspect of the disclosure (not presently claimed) is a method for using such a catalyst to treat an exhaust gas, for example by selectively reducing NOₓ, by storing NOₓ, or by oxidizing one or more of CO, hydrocarbons, and NH₃. Such catalyst are preferably supported on a wall-flow filter or a honeycomb flow-through support.

### BRIEF DESCRIPTION OF THE DRAWING

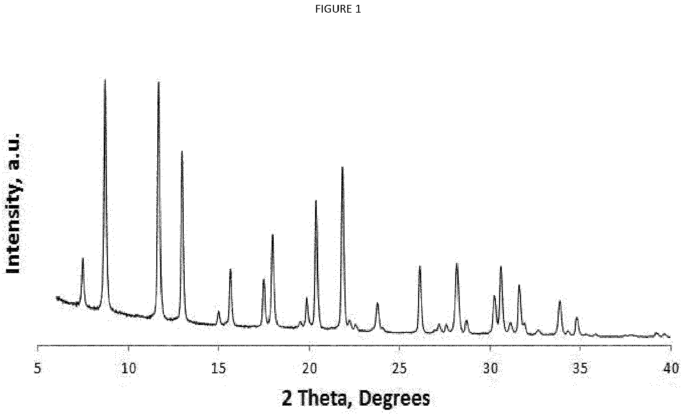

Figure 1 is an XRD pattern of a pure phase AFX zeolite according to the present invention.

### DETAILED DESCRIPTION OF PREFERRED EMBODIMENTS OF THE INVENTION

AFX zeolites prepared according to the present invention are pure phase. As used herein, the term "AFX" refers to an AFX framework type as recognized by the International Zeolite Association (IZA) Structure Commission. The term "zeolite" refers to an aluminosilicate molecular sieve having a framework composed primarily of alumina and silica moieties, and thus does not include other isotypes such as SAPOs, AlPOs, and the like. As used herein, the term "pure phase" means that at least 90 percent of the zeolite framework is type AFX. In certain embodiments, the AFX zeolite contains at least 95 percent, or even at least 97 percent of the AFX framework. In certain embodiments, the AFX molecular sieve is substantially free of other crystalline phases and in certain embodiments it is not an intergrowth of two or more framework types. Unless otherwise specified, all compositional percentages used herein are based on weight.

In certain embodiments, the AFX zeolite is substantially free of large pore frameworks. In certain embodiments, the AFX zeolite is substantially free of medium pore frameworks. In certain embodiments, the AFX zeolite is substantially a free of zeolite Y framework. As used herein, the term "substantially free" means that the zeolite contains less than one percent of the names framework impurity. As used herein, the term "large pore" means a framework having a maximum ring size of at least 12 tetrahedral atoms and the term "small pore" means a framework having a maximum ring size of at least 8 tetrahedral atoms.

AFX zeolites prepared according to the present invention have an silica-to-alumina ratio (SAR) of 12 to 30, such as about 15-20, about 20-25, 25-30, The SAR is based on the synthesized zeolite crystal and not the starting synthesis gel. The silica-to-alumina ratio of zeolites may be determined by conventional analysis. This ratio is meant to represent, as closely as possible, the ratio in the rigid atomic framework of the zeolite crystal and to exclude silicon or aluminum in the binder or in cationic or other form within the channels. Since it may be difficult to directly measure the silica to alumina ratio of zeolite after it has been combined with a binder material, particularly an alumina binder, these silica-to-alumina ratios are expressed in terms of the SAR of the zeolite *per se,* i.e., prior to the combination of the zeolite with the other catalyst components.

The AFX zeolite crystals of the present invention preferably have a mean crystal size and/or a D₉₀ crystal size of 0.5 to 7 µm, such as 0.5-2.5 µm or about 2.5-5 µm. The crystal size is based on individual crystals (including twinned crystals) but does not include agglomerations of crystals. Crystal size is the length of longest diagonal of the three dimensional crystal. Direct measurement of the crystal size can be performed using microscopy methods, such as SEM and TEM. For example, measurement by SEM involves examining the morphology of materials at high magnifications (typically 1000× to 10,000×). The SEM method can be performed by distributing a representative portion of the zeolite powder on a suitable mount such that individual particles are reasonably evenly spread out across the field of view at 1000× to 10,000× magnification. From this population, a statistically significant sample of random individual crystals (e.g., 50 - 200) are examined and the longest diagonal of the individual crystals are measured and recorded. (Particles that are clearly large polycrystalline aggregates should not be included the measurements.) Based on these measurements, the arithmetic mean of the sample crystal sizes is calculated.

In certain embodiments, the AFX crystals are milled to adjust the composition's particle size. In other embodiments, the AFX crystals are unmilled.

AFX zeolites of the present invention are preferably prepared with an organic SDA, such as 1,3-Bis(1-adamantyl)imidazolium hydroxide. Regardless of the SDA used, the zeolite synthesis is preferably free of halogens, such as fluorine.

The SDA, a source of alumina, a source of silica, and optionally a source of alkali metal such as sodium, are mixed as prepared as a synthesis gel. Sources of alumina include ammonium-form zeolites and hydrogen-form zeolite, such as NH4-form zeolite Y and H-form zeolite Y. Preferably, the source of alkali is not the source of alumina (e.g., no Na-form zeolite Y). Sources of silica include sodium silicate.

The synthesis gel has the following compositional ratios: ${SiO}_{2} / {Al}_{2} {O}_{3} = 18 - 105$ ${Na}_{2} O / {Al}_{2} {O}_{3} = 7 - 23$ ${SDA}_{2} O / {Al}_{2} {O}_{3} = 1.5 - 18$ ${H}_{2} O / {Al}_{2} {O}_{3} = 775 - 2845$ ${OH}^{-} / {SiO}_{2} = 0.3 - 0.65$ In certain embodiments, the synthesis gel has one or more of the following ratios: SiO₂/Al₂O₃ = about 18 - 105; SDA₂O/Al₂O₃ = about 1.5 - 18; OH⁻/SiO₂= about 0.6 - 0.65 or about 0.4-0.9.

The synthesis gel is heated to a temperature greater than 100 °C, for example about 120-160 °C, or about 140-150 °C, for a period of time sufficient to form zeolite crystals. The hydrothermal crystallization process is typically conducted under pressure, such as in an autoclave, and is preferably under autogeneous pressure. The reaction mixture can be stirred during crystal formation. The reaction time is typically about 2-15 days, for example 7 - 10 days.

To improve selectivity for AFX and/or to shorten the crystallization process, the reaction mixture can be seeded with AFX crystals. The AFX crystals can also be allowed to nucleate spontaneously from the reaction mixture.

Once the AFX zeolite crystals have formed, the solid product can be separated from the mother liquor by standard mechanical separate techniques, such as filtration. The recovered solid product is then washed and dried. The crystals can be thermally treated to remove the SDA, thus providing the AFX zeolite product. The AFX zeolite crystals can also be calcined.

The AFX zeolite can be used as a catalyst for various processes, such as treatment of combustion exhaust gas, hydrocarbon cracking, and conversion of methane to an olefin (MTO), or conversion of methane to methanol. Treatable exhaust gases include those generated by lean burn combustion, such as exhaust from diesel engines, gas turbines, power plants, lean burn gasoline engines, and engines burning alternative fuels such as methanol, CNG, and the like. Other treatable exhaust gases include those generated by rich burn engines, such as gasoline engines. The AFX zeolites can also be used in other chemical processes such as water treatment and/or purification.

For the abovementioned processes, the AFX zeolite is preferably used in heterogeneous catalytic reaction systems (i.e., solid catalyst in contact with a gas reactant). To improve contact surface area, mechanical stability, and/or fluid flow characteristics, the catalysts can be disposed on and/or within a large surface area substrate, such a porous substrate. In certain embodiments, a washcoat containing the catalyst is applied to an inert substrate, such as corrugated metal plate, pellets, a flow-through honeycomb cordierite or AT brick, or a honeycomb wall-flow filter. Alternatively, the catalyst is kneaded along with other components such as fillers, binders, and reinforcing agents, into an extrudable paste which is then extruded through a die to form a honeycomb brick. Accordingly, in certain embodiments provided is a catalyst article comprising a metal-promoted AFX zeolite catalyst described herein coated on and/or incorporated into a substrate.

AFX zeolites prepared according to the present invention can be used in combination with a promoter metal. Promoter metal should be broadly interpreted and specifically includes copper, nickel, zinc, iron, tungsten, molybdenum, cobalt, titanium, zirconium, manganese, chromium, vanadium, niobium, as well as tin, bismuth, and antimony; platinum group metals, such as ruthenium, rhodium, palladium, indium, platinum, and precious metals such as gold and silver. Preferred transition metals are base metals, and preferred base metals include those selected from the group consisting of chromium, manganese, iron, cobalt, nickel, and copper, and mixtures thereof. In a preferred embodiment, at least one of the promoter metals is copper. Other preferred promoter metals include iron, particularly in combination with copper. Preferred metals for converting hydrocarbons and selective reduction of NOₓ in exhaust gas include Cu and Fe. Particularly useful metals for oxidizing CO, hydrocarbons, and/or ammonia are Pt and Pd.

The metal used in combination with the AFX zeolite is preferably a promoter metal disposed on and/or within the zeolite material as extra-framework metals. As used herein, an "extra-framework metal" is one that resides within the molecular sieve and/or on at least a portion of the molecular sieve surface, preferably as an ionic species, does not include aluminum, and does not include atoms constituting the framework of the molecular sieve. Preferably, the presence of the promoter metal(s) facilitates the treatment of exhaust gases, such as exhaust gas from a diesel engine, including processes such as NOₓ reduction, NH₃ oxidation, and NOₓ storage.

In certain embodiments, the promoter metal is present in the zeolite material at a concentration of about 0.1 to about 10 weight percent (wt%) based on the total weight of the zeolite, for example from about 0.5 wt% to about 5 wt%, from about 0.5 to about 1 wt%, from about 1 to about 5 wt%, about 2.5 wt% to about 3.5 wt%. For embodiments which utilize copper, iron, or the combination thereof, the concentration of these transition metals in the zeolite material is preferably about 1 to about 5 weight percent, more preferably about 2.5 to about 3.5 weight percent.

In certain embodiments, the promoter metal is present in an amount relative to the amount of aluminum in the zeolite, namely the framework aluminum. As used herein, the promoter metal:aluminum (M:Al) ratio is based on the relative molar amount of promoter metal to molar framework Al in the corresponding zeolite. In certain embodiments, the catalyst material has a M:Al ratio of about 0.1 to about 1.0, preferably about 0.2 to about 0.5. An M:Al ratio of about 0.2 to about 0.5 is particularly useful where M is copper, and more particularly where M is copper and the SAR of the zeolite is about 20 - 25.

Preferably, incorporation of Cu occurs during synthesis or after, for example, by ion exchange or impregnation. In one example, a metal-exchanged zeolite is synthesized within an ionic copper mixture. The metal-exchanged zeolite may then be washed, dried, and calcined.

Generally, ion exchange of the catalytic metal cation into or on the molecular sieve may be carried out at room temperature or at a temperature up to about 80° C over a period of about 1 to 24 hours at a pH of about 7. The resulting catalytic molecular sieve material is preferably dried at about 100 to 120 °C overnight and calcined at a temperature of at least about 500 °C.

In certain embodiments, the catalyst composition comprises the combination of at least one promoter metal and at least one alkali or alkaline earth metal, wherein the transition metal(s) and alkali or alkaline earth metal(s) are disposed on or within the zeolite material. The alkali or alkaline earth metal can be selected from sodium, potassium, rubidium, cesium, magnesium, calcium, strontium, barium, or some combination thereof. As used here, the phrase "alkali or alkaline earth metal" does not mean the alkali metals and alkaline earth metals are used in the alternative, but instead that one or more alkali metals can be used alone or in combination with one or more alkaline earth metals and that one or more alkaline earth metals can be used alone or in combination with one or more alkali metals. In certain embodiments, alkali metals are preferred. In certain embodiments, alkaline earth metals are preferred. Preferred alkali or alkaline earth metals include calcium, potassium, and combinations thereof. In certain embodiments, the catalyst composition is essentially free of magnesium and/or barium. In certain embodiments, the catalyst is essentially free of any alkali or alkaline earth metal except calcium and potassium. In certain embodiments, the catalyst is essentially free of any alkali or alkaline earth metal except calcium. And in certain other embodiments, the catalyst is essentially free of any alkali or alkaline earth metal except potassium. As used herein, the term "essentially free" with respect to metal means that the material does not have an appreciable amount of the particular metal. That is, the particular metal is not present in amount that would affect the basic physical and/or chemical properties of the material, particularly with respect to the material's capacity to selectively reduce or store NOₓ.

In certain embodiments, the zeolite material has a post-synthesis alkali content of less than 3 weight percent, more preferably less than 1 weight percent, and even more preferably less than 0.1 weight percent. Here, post-synthesis alkali content refers to the amount of alkali metal occurring in the zeolite as a result of synthesis (i.e., alkali derived from the synthesis starting materials) and does not include alkali metal added after synthesis. In certain embodiments, alkali metal can be added after synthesis to work in combination with the promoter metal.

In certain embodiments, the metal promoted zeolite catalysts also contain a relatively large amount of cerium (Ce). In certain embodiments, the cerium concentration in the catalyst material is present in a concentration of at least about 1 weight percent, based on the total weight of the zeolite. Examples of preferred concentrations include at least about 2.5 weight percent, at least about 5 weight percent, at least about 8 weight percent, at least about 10 weight percent, about 1.35 to about 13.5 weight percent, about 2.7 to about 13.5 weight percent, about 2.7 to about 8.1 weight percent, about 2 to about 4 weight percent, about 2 to about 9.5 weight percent, and about 5 to about 9.5 weight percent, based on the total weight of the zeolite. In certain embodiments, the cerium concentration in the catalyst material is about 1.42 to about 15.57 g/m³ (about 50 to about 550 g/ft³). Other ranges of Ce include: above 2.83 g/m³ (100 g/ft³), above 5.66 g/m³ (200 g/ft³), above 8.50 (300 g/ft³), above 11.33 g/m³ (400 g/ft³), above 14.16 g/m³ (500 g/ft³), from about 2.12 to about 9.91 g/m³ (about 75 to about 350 g/ft³), from about 2.83 to about 8.50 g/m³ (about 100 to about 300 g/ft³), and from about 2.83 to about 7.08 g/m³ (about 100 to about 250 g/ft³).

Certain aspects provide a catalytic washcoat. The washcoat comprising the AFX catalyst described herein is preferably a solution, suspension, or slurry. Suitable coatings include surface coatings, coatings that penetrate a portion of the substrate, coatings that permeate the substrate, or some combination thereof.

In general, the production of an extruded solid body containing the metal promoted AFX catalyst involves blending the AFX zeolite and the promoter metal (either separately or together as a metal-exchanged zeolite), a binder, an optional organic viscosity-enhancing compound into an homogeneous paste which is then added to a binder/matrix component or a precursor thereof and optionally one or more of stabilized ceria, and inorganic fibers. The blend is compacted in a mixing or kneading apparatus or an extruder. The mixtures have organic additives such as binders, pore formers, plasticizers, surfactants, lubricants, dispersants as processing aids to enhance wetting and therefore produce a uniform batch. The resulting plastic material is then molded, in particular using an extrusion press or an extruder including an extrusion die, and the resulting moldings are dried and calcined. The organic additives are "burnt out" during calcinations of the extruded solid body. A metal-promoted AFX zeolite catalyst may also be washcoated or otherwise applied to the extruded solid body as one or more sub-layers that reside on the surface or penetrate wholly or partly into the extruded solid body. Alternatively, a metal-promoted AFX zeolite can be added to the paste prior to extrusion.

Extruded solid bodies containing metal-promoted AFX zeolites generally comprise a unitary structure in the form of a honeycomb having uniform-sized and parallel channels extending from a first end to a second end thereof. Channel walls defining the channels are porous. Typically, an external "skin" surrounds a plurality of the channels of the extruded solid body. The extruded solid body can be formed from any desired cross section, such as circular, square or oval. Individual channels in the plurality of channels can be square, triangular, hexagonal, circular etc. Channels at a first, upstream end can be blocked, e.g. with a suitable ceramic cement, and channels not blocked at the first, upstream end can also be blocked at a second, downstream end to form a wall-flow filter. Typically, the arrangement of the blocked channels at the first, upstream end resembles a checker-board with a similar arrangement of blocked and open downstream channel ends.

The binder/matrix component is preferably selected from the group consisting of cordierite, nitrides, carbides, borides, intermetallics, lithium aluminosilicate, a spinel, an optionally doped alumina, a silica source, titania, zirconia, titania-zirconia, zircon and mixtures of any two or more thereof. The paste can optionally contain reinforcing inorganic fibers selected from the group consisting of carbon fibers, glass fibers, metal fibers, boron fibers, alumina fibers, silica fibers, silica-alumina fibers, silicon carbide fibers, potassium titanate fibers, aluminum borate fibers and ceramic fibers.

The alumina binder/matrix component is preferably gamma alumina, but can be any other transition alumina, i.e., alpha alumina, beta alumina, chi alumina, eta alumina, rho alumina, kappa alumina, theta alumina, delta alumina, lanthanum beta alumina and mixtures of any two or more such transition aluminas. It is preferred that the alumina is doped with at least one non-aluminum element to increase the thermal stability of the alumina. Suitable alumina dopants include silicon, zirconium, barium, lanthanides and mixtures of any two or more thereof. Suitable lanthanide dopants include La, Ce, Nd, Pr, Gd and mixtures of any two or more thereof.

Sources of silica can include a silica sol, quartz, fused or amorphous silica, sodium silicate, an amorphous aluminosilicate, an alkoxysilane, a silicone resin binder such as methylphenyl silicone resin, a clay, talc or a mixture of any two or more thereof. Of this list, the silica can be SiO₂ as such, feldspar, mullite, silica-alumina, silica-magnesia, silica-zirconia, silica-thoria, silica-berylia, silica-titania, ternary silica-alumina-zirconia, ternary silica-alumina-magnesia, ternary-silica-magnesia-zirconia, ternary silica-alumina-thoria and mixtures of any two or more thereof.

Preferably, the metal-promoted AFX zeolite is dispersed throughout, and preferably evenly throughout, the entire extruded catalyst body.

Where any of the above extruded solid bodies are made into a wall-flow filter, the porosity of the wall-flow filter can be from 30-80%, such as from 40-70%. Porosity and pore volume and pore radius can be measured e.g. using mercury intrusion porosimetry

The metal-promoted AFX catalyst described herein can promote the reaction of a reductant, preferably ammonia, with nitrogen oxides to selectively form elemental nitrogen (N₂) and water (H₂O). Thus, in one embodiment, the catalyst can be formulated to favor the reduction of nitrogen oxides with a reductant (i.e., an SCR catalyst). Examples of such reductants include hydrocarbons (e.g., C3 - C6 hydrocarbons) and nitrogenous reductants such as ammonia and ammonia hydrazine or any suitable ammonia precursor, such as urea ((NH₂)₂CO), ammonium carbonate, ammonium carbamate, ammonium hydrogen carbonate or ammonium formate.

The metal-promoted AFX catalyst described herein can also promote the oxidation of ammonia. Thus, in another embodiment, the catalyst can be formulated to favor the oxidation of ammonia with oxygen, particularly a concentrations of ammonia typically encountered downstream of an SCR catalyst (e.g., ammonia oxidation (AMOX) catalyst, such as an ammonia slip catalyst (ASC)). In certain embodiments, the metal-promoted AFX zeolite catalyst is disposed as a top layer over an oxidative under-layer, wherein the under-layer comprises a platinum group metal (PGM) catalyst or a non-PGM catalyst. Preferably, the catalyst component in the underlayer is disposed on a high surface area support, including but not limited to alumina.

In yet another embodiment, an SCR and AMOX operations are performed in series, wherein both processes utilize a catalyst comprising the metal-promoted AFX zeolite described herein, and wherein the SCR process occurs upstream of the AMOX process. For example, an SCR formulation of the catalyst can be disposed on the inlet side of a filter and an AMOX formulation of the catalyst can be disposed on the outlet side of the filter.

Accordingly, provided is a method for the reduction of NOₓ compounds or oxidation of NH₃ in a gas, which comprises contacting the gas with a catalyst composition described herein for the catalytic reduction of NOₓ compounds for a time sufficient to reduce the level of NOₓ compounds and/or NH₃ in the gas. In certain embodiments, provided is a catalyst article having an ammonia slip catalyst disposed downstream of a selective catalytic reduction (SCR) catalyst. In such embodiments, the ammonia slip catalyst oxidizes at least a portion of any nitrogenous reductant that is not consumed by the selective catalytic reduction process. For example, in certain embodiments, the ammonia slip catalyst is disposed on the outlet side of a wall flow filter and an SCR catalyst is disposed on the upstream side of a filter. In certain other embodiments, the ammonia slip catalyst is disposed on the downstream end of a flow-through substrate and an SCR catalyst is disposed on the upstream end of the flow-through substrate. In other embodiments, the ammonia slip catalyst and SCR catalyst are disposed on separate bricks within the exhaust system. These separate bricks can be adjacent to, and in contact with, each other or separated by a specific distance, provided that they are in fluid communication with each other and provided that the SCR catalyst brick is disposed upstream of the ammonia slip catalyst brick.

In certain embodiments, the SCR and/or AMOX process is performed at a temperature of at least 100 °C. In another embodiment, the process(es) occur at a temperature from about 150 °C to about 750 °C. In a particular embodiment, the temperature range is from about 175 to about 550 °C. In another embodiment, the temperature range is from 175 to 400 °C. In yet another embodiment, the temperature range is 450 to 900 °C, preferably 500 to 750 °C, 500 to 650 °C, 450 to 550 °C, or 650 to 850 °C. Embodiments utilizing temperatures greater than 450 °C are particularly useful for treating exhaust gases from a heavy and light duty diesel engine that is equipped with an exhaust system comprising (optionally catalyzed) diesel particulate filters which are regenerated actively, e.g. by injecting hydrocarbon into the exhaust system upstream of the filter, wherein the zeolite catalyst is located downstream of the filter

According to another aspect provided is a method for the reduction of NOₓ compounds and/or oxidation of NH₃ in a gas, which comprises contacting the gas with a catalyst described herein for a time sufficient to reduce the level of NOₓ compounds in the gas. Methods may comprise one or more of the following steps: (a) accumulating and/or combusting soot that is in contact with the inlet of a catalytic filter; (b) introducing a nitrogenous reducing agent into the exhaust gas stream prior to contacting the catalytic filter, preferably with no intervening catalytic steps involving the treatment of NOₓ and the reductant; (c) generating NH₃ over a NOₓ adsorber catalyst or lean NOₓ trap, and preferably using such NH₃ as a reductant in a downstream SCR reaction; (d) contacting the exhaust gas stream with a DOC to oxidize hydrocarbon based soluble organic fraction (SOF) and/or carbon monoxide into CO₂, and/or oxidize NO into NO₂, which in turn, may be used to oxidize particulate matter in particulate filter; and/or reduce the particulate matter (PM) in the exhaust gas; (e) contacting the exhaust gas with one or more flow-through SCR catalyst device(s) in the presence of a reducing agent to reduce the NOₓ concentration in the exhaust gas; and (f) contacting the exhaust gas with an ammonia slip catalyst, preferably downstream of the SCR catalyst to oxidize most, if not all, of the ammonia prior to emitting the exhaust gas into the atmosphere or passing the exhaust gas through a recirculation loop prior to exhaust gas entering/re-entering the engine.

In another embodiment, all or at least a portion of the nitrogen-based reductant, particularly NH₃, for consumption in the SCR process can be supplied by a NOₓ adsorber catalyst (NAC), a lean NOₓ trap (LNT), or a NOₓ storage/reduction catalyst (NSRC), disposed upstream of the SCR catalyst, e.g., a SCR catalyst disposed on a wall-flow filter. NAC components include a catalyst combination of a basic material (such as alkali metal, alkaline earth metal or a rare earth metal, including oxides of alkali metals, oxides of alkaline earth metals, and combinations thereof), and a precious metal (such as platinum), and optionally a reduction catalyst component, such as rhodium. Specific types of basic material useful in the NAC include cesium oxide, potassium oxide, magnesium oxide, sodium oxide, calcium oxide, strontium oxide, barium oxide, and combinations thereof. The precious metal is preferably present at about 10 to about 200 g/ft³, such as 20 to 60 g/ft³. Alternatively, the precious metal of the catalyst is characterized by the average concentration which may be from about 40 to about 100 grams/ft³.

Under certain conditions, during the periodically rich regeneration events, NH₃ may be generated over a NOₓ adsorber catalyst. The SCR catalyst downstream of the NOₓ adsorber catalyst may improve the overall system NOₓ reduction efficiency. In the combined system, the SCR catalyst is capable of storing the released NH₃ from the NAC catalyst during rich regeneration events and utilizes the stored NH₃ to selectively reduce some or all of the NOₓ that slips through the NAC catalyst during the normal lean operation conditions.

The method for treating exhaust gas as described herein can be performed on an exhaust gas derived from a combustion process, such as from an internal combustion engine (whether mobile or stationary), a gas turbine and coal or oil fired power plants. The method may also be used to treat gas from industrial processes such as refining, from refinery heaters and boilers, furnaces, the chemical processing industry, coke ovens, municipal waste plants and incinerators, etc. In a particular embodiment, the method is used for treating exhaust gas from a vehicular lean burn internal combustion engine, such as a diesel engine, a lean-burn gasoline engine or an engine powered by liquid petroleum gas or natural gas.

In certain aspects, provided is a system for treating exhaust gas generated by combustion process, such as from an internal combustion engine (whether mobile or stationary), a gas turbine, coal or oil fired power plants, and the like. Such systems include a catalytic article comprising the metal-promoted AFX zeolite described herein and at least one additional component for treating the exhaust gas, wherein the catalytic article and at least one additional component are designed to function as a coherent unit.

In certain embodiments, the system comprises a catalytic article comprising a metal-promoted AFX zeolite described herein, a conduit for directing a flowing exhaust gas, a source of nitrogenous reductant disposed upstream of the catalytic article. The system can include a controller for the metering the nitrogenous reductant into the flowing exhaust gas only when it is determined that the zeolite catalyst is capable of catalyzing NOₓ reduction at or above a desired efficiency, such as at above 100 °C, above 150 °C or above 175 °C. The metering of the nitrogenous reductant can be arranged such that 60% to 200% of theoretical ammonia is present in exhaust gas entering the SCR catalyst calculated at 1:1 NH₃/NO and 4:3 NH₃/NO₂.

In another embodiment, the system comprises an oxidation catalyst (e.g., a diesel oxidation catalyst (DOC)) for oxidizing nitrogen monoxide in the exhaust gas to nitrogen dioxide can be located upstream of a point of metering the nitrogenous reductant into the exhaust gas. In one embodiment, the oxidation catalyst is adapted to yield a gas stream entering the SCR zeolite catalyst having a ratio of NO to NO₂ of from about 4:1 to about 1:3 by volume, e.g. at an exhaust gas temperature at oxidation catalyst inlet of 250 °C to 450 °C. The oxidation catalyst can include at least one platinum group metal (or some combination of these), such as platinum, palladium, or rhodium, coated on a flow-through monolith substrate. In one embodiment, the at least one platinum group metal is platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

In a further embodiment, a suitable filter substrate is located between the oxidation catalyst and the SCR catalyst. Filter substrates can be selected from any of those mentioned above, e.g. wall flow filters. Where the filter is catalyzed, e.g. with an oxidation catalyst of the kind discussed above, preferably the point of metering nitrogenous reductant is located between the filter and the zeolite catalyst. Alternatively, if the filter is un-catalyzed, the means for metering nitrogenous reductant can be located between the oxidation catalyst and the filter.

### EXAMPLES

### Example 1: Preparation of high SAR AFX zeolite.

Sodium silicate (silica source) and zeolite Y (alumina source) were reacted in the presence of 1,3-Bis(1-adamantyl) imidazolium hydroxide (organic templating agent) at about 145 °C for 7 - 10 days. The resulting crystalline material was separated from the mother liquor, and then washed and dried. Analysis confirmed that the product contained high purity AFX zeolite having a SAR of about 22. Figure 1 shows an XRD pattern of the resulting pure phase AFX zeolite.

## Claims

1. A method for making an aluminosilicate zeolite comprising at least about 90% phase pure AFX framework and a silica-to-alumina ratio of 12-30, the method comprising the step of reacting a synthesis gel comprising a silica source, an alumina source selected from ammonium-form zeolites and/or hydrogen-form zeolites, and a structured directing agent at a temperature of at least 100 °C until crystals of AFX zeolite form, wherein the synthesis gel has the following compositional ratios:
SiO₂/Al₂O₃ of 18-105
Na₂O/Al₂O₃ of 7-23
SDA₂O/Al₂O₃ of 1.5-18
H₂O/Al₂O₃ of 775-2845
OH⁻/SiO₂ of 0.3-0.65,
wherein the silica-to-alumina ratio is the atomic framework ratio.

2. The method of claim 1, wherein the zeolite has an arithmetic mean crystal size measured using SEM or TEM of 0.5-7 µm, wherein the arithmetic mean crystal size is calculated by recording the lengths of the longest diagonal of a statistically significant sample of individual crystals.

3. The method of any preceding claim, wherein the zeolite comprises 95% phase pure AFX framework.

4. The method of any preceding claim, wherein the structured directing agent comprises 1,3-Bis(1-adamantyl)imidazolium hydroxide.

## Patentansprüche

1. Verfahren zur Herstellung eines Aluminosilikat-Zeoliths, umfassend ein zu mindestens etwa 90 % phasenreines AFX-Gerüst und ein Siliciumdioxid-zu-Tonerde-Verhältnis von 12-30, wobei das Verfahren den Schritt des Umsetzens eines Synthesegels, umfassend eine Siliciumdioxidquelle, eine Tonerdequelle, ausgewählt aus Ammoniumform-Zeolithen und/oder Wasserstoffform-Zeolithen, und ein strukturdirigierendes Mittel, bei einer Temperatur von mindestens 100 °C umfasst, bis sich AFX-Zeolithkristalle bilden, wobei das Synthesegel die folgenden Zusammensetzungsverhältnisse aufweist:
SiO₂/Al₂O₃ von 18-105
Na₂O/Al₂O₃ von 7-23
SDA₂O/Al₂O₃ von 1,5-18
H₂O/Al₂O₃ von 775-2845
OH⁻/SiO₂ von 0,3-0,65,
wobei das Siliciumdioxid-zu-Aluminiumoxid-Verhältnis das atomare Gerüstverhältnis ist.

2. Verfahren nach Anspruch 1, wobei der Zeolith eine arithmetische mittlere Kristallgröße, die unter Verwendung von SEM oder TEM von 0,5-7 µm gemessen wird, aufweist, wobei die arithmetische mittlere Kristallgröße durch Aufzeichnen der Längen der längsten Diagonale einer statistisch signifikanten Probe einzelner Kristalle berechnet wird.

3. Verfahren nach einem der vorstehenden Ansprüche, wobei der Zeolith ein zu 95 % phasenreines AFX-Gerüst umfasst.

4. Verfahren nach einem der vorstehenden Ansprüche, wobei das strukturdirigierende Mittel 1,3-Bis(1-adamantyl)imidazoliumhydroxid umfasst.

## Revendications

1. Procédé de fabrication d'une zéolithe d'aluminosilicate comprenant au moins environ 90 % de structure AFX pure en phase et un rapport silice-alumine de 12 à 30, le procédé comprenant l'étape de réaction d'un gel de synthèse comprenant une source de silice, une source d'alumine choisie parmi des zéolithes sous forme d'ammonium et/ou des zéolithes sous forme d'hydrogène, et un agent de direction structuré à une température d'au moins 100 °C jusqu'à formation de cristaux de zéolite AFX, dans lequel le gel de synthèse a les rapports de composition suivants :
SiO₂/Al₂O₃ de 18 à 105
Na₂O/Al₂O₃ de 7 à 23
SDA₂O/Al₂O₃ de 1,5 à 18
H₂O/Al₂O₃ de 775 à 2845
OH⁻/SiO₂ de 0,3 à 0,65,
dans lequel le rapport silice-alumine est le rapport de la structure atomique.

2. Procédé selon la revendication 1, dans lequel la zéolite a une taille moyenne arithmétique de cristal mesurée à l'aide d'un MEB ou d'un TEM de 0,5 à 7 µm, dans lequel la taille moyenne arithmétique de cristal est calculée en enregistrant les longueurs de la diagonale la plus longue d'un échantillon statistiquement significatif de cristaux individuels.

3. Procédé selon l'une quelconque revendication précédente, dans lequel la zéolite comprend une structure AFX pure à 95 % en phase.

4. Procédé selon l'une quelconque revendication précédente, dans lequel l'agent directeur structuré comprend de l'hydroxyde de 1,3-bis(1-adamantyl)imidazolium.
